# EUROPEAN PATENT APPLICATION

(11) **EP 3 355 263 A1**
(43) Date of publication of application: **01.08.2018**
(21) Application number: 16848085.3
(22) Date of filing: 19.09.2016
(51) Int. Cl.: G06Q 50/30

(54) **MOBILE SERVICE TERMINAL AND SYSTEM USED FOR AIRPORT SERVICE, AND DATA PROCESSING METHOD**

(30) Priority: 21.09.2015 CN 201510605515
(71) Applicant: Chigoo Interactive Technology Co., Ltd., Wuxi, Jiangsu 214028 (CN)
(72) Inventor: CHEN, Tao, Wuxi Jiangsu 214028 (CN); WANG, Xinheng, Wuxi Jiangsu 214028 (CN); LEI, Ming, Wuxi Jiangsu 214028 (CN); ZHENG, Chengming, Wuxi Jiangsu 214028 (CN)
(74) Representative: Hautier IP
(86) International application number: PCT/CN2016/099394
(87) International publication number: WO 2017/050204

(57) **Abstract**

A mobile service terminal for airport service is disclosed. The mobile service terminal comprises an information collecting unit (11) configured to acquire user information, an interface unit (12) configured to interact with an external device, a processing unit (13) connected with the information collecting unit and the interface unit and configured to authenticate the identity of a user according to the collected user information, call service content matching a target user group to which the user belongs from the data of external device according to the identity information of the user, and adjust the service content according to characteristic information of the user when the user receives the service content, and an output unit (14) connected with the processing unit and configured to output the service content. The present invention further discloses a mobile service system for airport services and a data processing method for airport services. According to the present invention, personalized services can be provided to users, the services can be adjusted in real time according to the intention of users, thus improving user's satisfaction.

## Description

### TECHNICAL FIELD

The present invention relates to data processing, and more particularly to a mobile service terminal, system and data processing method for airport service.

### BACKGROUND

With rapid development of air transport industry and the improvement of socio-economic conditions, traditional and single-form service is facing challenges. Personalized airport service will bring people a better travel experience, thereby improving the competiveness of airport.

The applicant has made deep and wide research on the air service and has filed a number of patents, such as Chinese patent Application No. 201410653839.5 entitled "Method and system for providing mobile self-service in airport", Chinese design patent Application No. 201430296729.9 entitled "Multimedia trolley" and a Chinese utility model patent Application No. 201320012580.7 entitled "Trolley with electronic device, and charging device". The self-service product installed on a trolley in an airport terminal can present personal flight information and provide airport information services to the user. However, with the increasing of users' demands, such product cannot provide better experience sense, and more personalized and intelligent service.

### SUMMARY

In order to solve at least part of above issues, the present invention provides a mobile service terminal which can be used in a public place such as an airport terminal and the like to provide a personalized airport service aiming at different characteristic attributes of users.

According to one aspect of the present invention, a mobile service terminal for airport services is provided. The mobile service terminal may include an information collecting unit configured to acquire user information, the user information comprising identity information and/or characteristic information of the user and/or operation information entered from an user interface of the mobile service terminal; an interface unit configured to interact with an external device; a processing unit connected with the information collecting unit and the interface unit and configured to authenticate the identity of a user according to the collected user information, invoke service content matching a target user group to which the user belongs from the data of the external device according to the identity information of the user, and adjust the service content according to characteristic information of the user when the user receives the service content; and an output unit connected with the processing unit and configured to output the service content. The present invention can provide users with personalized service, which can be adjusted in real time according to the intention of users, thus improving degree of user's satisfaction.

According to another aspect of the present invention, a mobile service system for airport service is provided. The system may include a mobile service terminal as mentioned above, a backend server and/or an interface connected with a third-part server and a communication device configured to establish a network communication between the mobile service terminal, the backend server, and/or the third-party server.

The mobile service terminal and the mobile service system of the present invention can provide personalized services such as airport information, position locating, boarding gate navigation, boarding reminders, baggage inquiries, and airport business information in real time, and can display video and play sounds, and these services can be adjusted in real time according to the user's satisfaction. Compared with the current user's trolley in the airport, there is a qualitative improvement in the respect of intelligence and function diversification of service.

According to yet another aspect of the present invention, a method of data processing for airport service is provided, the airport is provided with mobile service terminal as described above, the method may include: acquiring user information by a mobile service terminal, wherein the user information comprises identity information / characteristic information of the user and/or operation information entered from an user interface of the mobile service terminal; authenticating the identity of a user by the mobile service terminal through interacting with an external device based on the collected user information; calling service content matching a target user group to which the user belongs from the data of the external device according to the identity information; and adjusting service content to be pushed according to characteristic information of the user when the user receives the service content.

The present invention can carry out authentication using an object with unique identification, such as a boarding pass, ID card, passport, mobile phone number, face, fingerprint and voiceprint and the like. Since these identifications are difficult to be imitated and unique, the authentication is of easy operation, high safety and high reliability. The identity information of the user is collected while being authenticated. The identity information and behavior information of the user is added to user database. With the increase of the collected user information, the user database is updated in real time so that the information recorded in the mobile service terminal is increased and updated, which facilitates the study on the user's behavior, thus providing data support for providing users with personalized service.

According to the above solutions, a huge database is formed with the collected tremendous amount of personal information. The user's population is directionally classified. The common behavior characteristics of potential target population can be identified through the analysis of user behavior data. Then different target user groups can be obtained by classifying the characteristics. An appropriate media can be selected to put advertisements to target user groups with common behavioral characteristics by applying the above solutions, thereby advertising costs can be saved, and advertising effectiveness can be improved. Further, with the increase in collected user information, user data will continue to dynamically update, the needs of the target user groups will become more and more explicit. As a result, the services provided to different target user groups are more and more accurate. Further, the service provided to the user is adjusted according to the collected characteristic information of the user so that the service provided to the user can be better matched with the user's needs.

In light of the above, solutions as described above can provide personalized service in an intelligent manner by means of information acquisition, analysis and integration, and the service can be adjusted in real time according to the willingness or need of user, thus providing users with a rich, on-demanded information services that can be effectively guided.

### BRIEF DESCRIPTION OF THE DRAWINGS

Fig. 1 is a schematic diagram of functional modules of a mobile service terminal according to an embodiment of the present invention;
Fig. 2 is a schematic diagram of functional modules of a mobile service terminal according to another embodiment of the present invention;
Fig. 3 is a schematic diagram of mobile service terminal mounted on a trolley according to an embodiment of the present invention;
Fig. 4 is a schematic diagram of a mobile service system for airport service according to an embodiment of the present invention;
Fig. 5 is a flow diagram showing a process of authenticating a user and providing corresponding service content according to an embodiment of the present invention;
Fig. 6 is a flow diagram showing a process of pushing personalized services to a user according to an embodiment of the present invention;
Fig. 7 is a flow diagram showing a process of providing personalized services according to the first embodiment of the present invention;
Fig. 8 is a flow diagram showing a process of providing personalized services according to the second embodiment of the present invention;
Fig. 9 is a flow diagram showing a process of providing personalized services according to the third embodiment of the present invention; and
Fig. 10 is a flow diagram showing a process of providing personalized services according to the fourth embodiment of the present invention.

### DETAILED DESCRIPTION

The present invention will be described in further detail with reference to the attached figures and specific embodiments in order to make the objectives, technical solutions and advantages of the present invention more clearly. Embodiments of the present invention may be applied to a personal computer system, a server computer system, a client, a microprocessor-based system, a set-top box, a programmable electronic product, and a distributed cloud computing technology environment including the above-described devices.

The functions of the related functional modules can be realized by a hardware processor and various units in the embodiments of the present invention.

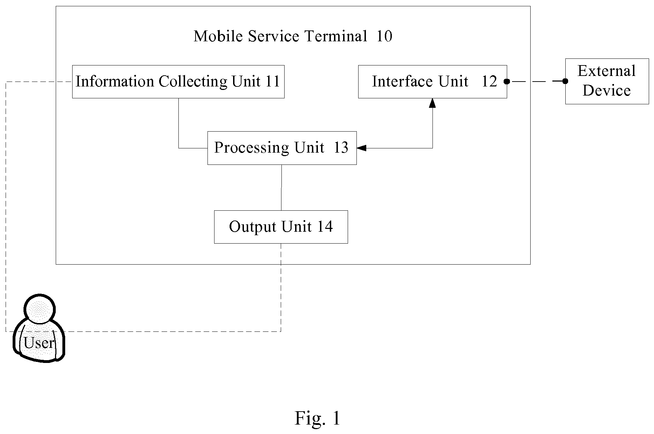

Fig. 1 is a schematic diagram of functional modules of a mobile service terminal according to an embodiment of the present invention. As shown in Fig. 1, the mobile service terminal may include: an information collecting unit 11, an interface unit 12, a processing unit 13 and an output unit 14. The information collecting unit 1 may output the collected information to the output unit 14. The processing unit 13 may interact with external device via the interface unit 12. The processing unit 13 may output the processed information to the output unit 14.

In the present embodiment, the information collecting unit 11 may be used to acquire user information. The user information may include identity information (such as user ID, flight number, gender, age, etc.), characteristic information (such as the number of uses (for example, the number of user is 2 when a women holds a child) and expressions (such as smile, frown), etc.) of the user and operation information (such as characters, numbers (for example, ID card numbers, phone numbers, baggage numbers, etc.), command, selection, click, slide, etc.) entered by the user on an user interface of the mobile service terminal. In the present embodiment, the information collecting unit 11 may include a first camera (i.e., a main camera) for acquiring the above-described identity information, a second camera (i.e., a sub camera) for acquiring the above-described characteristic information, and a touch screen unit for acquiring operation information entered by the user on an user interface of the mobile service terminal.

The cameras may have a variety of kinds of settings based on the needs of practical application. For example, the position of the main camera and the sub camera may be adjusted, the number of cameras may be increased or decreased, and these cameras may also be replaced by other devices with imaging capabilities, such as graphic encoding (such as two-dimensional code, etc.) scanning device. Furthermore, the acquired identity information may also be combined in different ways according to the needs of the application, or the type and quantity of the collected user information may be appropriately increased or decreased.

In the present embodiment, the interface unit 12 may be used to exchange data with an external device. The external device may be a backend server which provides data support for the mobile service terminal 10 or a third-party server, such as a background system of airport. The mobile service terminal 10 may acquire the flight number, airline, departure date, departure, destination, planned departure time, planned arrival time, estimated departure time, estimated arrival time, flight status, boarding gate, transit or stop and so on through this system.

In the present embodiment, the processing unit 13 connects with the information collecting unit 11 and the interface unit 12 respectively. The processing unit 13 may interact with the external data for user authentication based on the collected user information and / or the operation information entered on the user interface of the mobile service terminal. The processing unit 13 may also call service content concerned by a target user group to which the user belongs from external data according to the identity information of the user, and adjust above service content according to characteristic information of the user when the user receives the service content (the processing unit 13 will be described in detail below).

In the present embodiment, the output unit 14 connected with the processing unit 13 is used to output service content. Particularly, the output unit 14 may be an audio device for playing a sound, a video device for playing a video, or a combination product thereof.

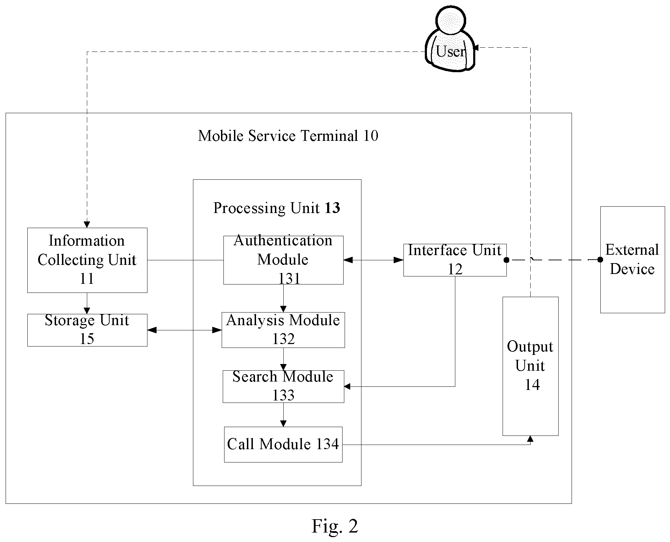

Fig. 2 is a schematic diagram of functional modules of a mobile service terminal according to another embodiment of the present invention. The present embodiment is similar to the embodiment in Fig. 1, and hence only the differences therebetween are described to avoid repetitive description. As shown in Fig. 2, the mobile service terminal 10 may include an information collecting unit 11, an interface unit 12, a processing unit 13, an output unit 14, and a storage unit 15. The processing unit 13 may include an authentication module 131, an analysis module 132, a search module 133, and a call module 134.

In the present embodiment, authentication module 131 may authenticate the identity of a user by receiving the user information collected by the information collecting unit 11, or by interacting with the external device through the interface unit 12. For example, the identity of a user may be authenticated by acquiring one of information or a composition of multiple information of a boarding pass, ID card, passport, phone number, face, fingerprint and voiceprint or the like.

In the present embodiment, the storage unit may receive the information collected by the information collecting unit 11. The storage unit may also be used to store database. The database may include at least one user's historical behavior information (e.g., a record of user's browsing the mobile service terminal, or flight record of user flying) and above-mentioned collected user information. The database may also be divided into multiple data packets according to preset target user groups. For example, the target user groups may be set to a high-end business group, a young ladies group, and a public group, etc. These target user groups are divided primarily based on different attributes of the user (e.g., age, gender, departure, destination, takeoff period, seating, flight frequency, and behavioral interests, etc).

In the present embodiment, the storage unit 15 and the interface unit 12 may be individually provided depending on the actual application requirements or may be provided at the same time. It is only necessary to provide the various data necessary for the mobile service terminal 10.

In the present embodiment, the authentication module 131 is used to authenticate the identity of a user in accordance with the collected user information. Specifically, the characteristic information of the user can be collected through scanning a boarding pass, an ID card and a passport, etc., or through logging in via phone number, or through a face and a voiceprint, etc to authenticate the identity of a user (Which will be described in detail below). It should be noted that above authentication methods may be used alone or in combination. For example, identity of a user can be authenticated through the ID card and phone number of these two kinds of user information.

In the present embodiment, the analysis module 132 can exchange information with the storage unit 15. The analysis module 132 may run analysis on the historical behavior information of user and the collected user information, etc., and then match attributes of the user with the attributes of each target user group so as to categorize the user into one or more target user groups.

In the present embodiment, the search module 133 may query information (for example, information such as financial management, finance, stock market, property market, etc. for high-end business groups, or fashion, cosmetic, star and other information for young ladies groups, or news, film, travel and other information for the public groups). The search module 133 may obtain the corresponding information entrance (e.g., a link).

In the present embodiment, the call module 134 may call above information of concern through the information entrance obtained by the search module 133 to display and/ or play on the user interface of the mobile service terminal.

In the present embodiment, the mobile service terminal can provide users with personalized service based on different characteristic attribute by users through storage and analysis on the tremendous amount of user database. Moreover, the service can be adjusted in real time according to the will or need of users, thus providing users with a rich, on-demanded information services that can be effectively guided.

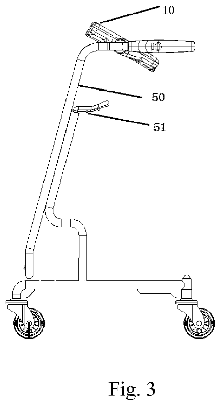

Fig. 3 is a schematic diagram showing a process of mobile service terminal mounted on a trolley according to an embodiment of the present invention. As shown in Fig. 3, the mobile service terminal 10 is mounted on the upper end portion of the trolley 50 frame for the user (e.g., a passenger waiting at the airport) to browse or listen in while pushing the trolley 50. The main camera may be located at the bottom of the mobile service terminal 10. When the boarding pass or ID card or passport for the user authentication is placed face-up on the portable baggage tray 51 on the frame of the trolley 50, the main camera on the mobile service terminal 10 may just scan the boarding pass or ID card or passport, and can analyze the information of boarding pass. The sub camera located on the front of the mobile service terminal and just above the screen may be used for face recognition. When the user is pushing the trolley 50, it is possible to obtain an image of the user's face. When confirmed by the user, the number of users that are using the trolley, their gender, age, expression and other information may be obtained and identified through taking the photographs of the user using the existing third-party face recognition system Face ++ (for example, the system manufacturers can be Beijing Megvii Technology Co., Ltd.), thereby providing users with more accurate, more intelligent service information.

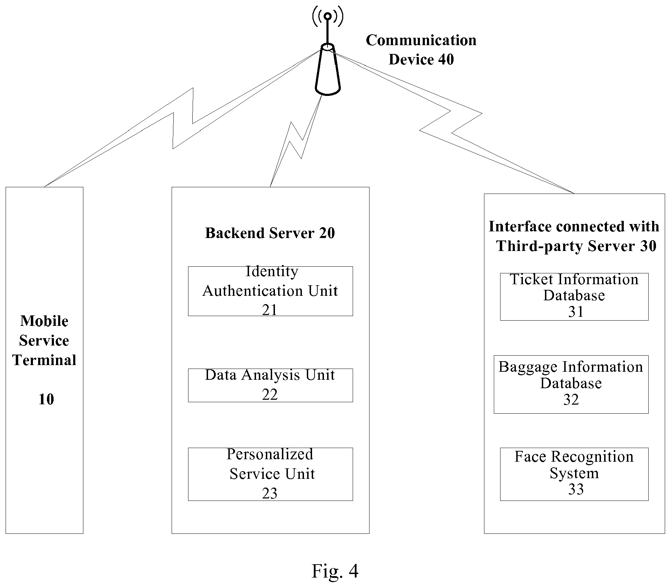

Fig. 4 is a schematic diagram showing a process of a mobile service system for airport service according to an embodiment of the present invention. As shown in Fig. 4, the system may include a mobile service terminal 10 having above-described configuration and function, an external device for providing external data support for the mobile service terminal 10, the external device may be a backend server 20, and/or an interface connected with a third-party server 30 and a communication device used to establish a network communication connection between the mobile service terminal 10, the backend server 20, and/or the third-party server 30. The third-party server 30 may be a server dedicated to flight and passenger management.

In the present embodiment, the background sever 20 may include an identity authentication unit 21 for authenticating the identity of the user, a data analysis unit 22 for data analysis, and an personalized service unit 23 for providing personalized service interface and personalized service information. The third-party server 30 may include a ticket information database 31, a baggage information database 32 and a face recognition system 33.

In the present embodiment, the identity authentication unit 21 may communicate with the ticket information database 31 to obtain user current journey data (such as air ticket information) therefrom. The data analysis unit 22 may be used to analyze all kinds of data. The personalized service unit 23 may provide personalized service for users, for example, the personalized service unit 23 may connect with the baggage information database 32 to obtain current baggage information of the user therefrom.

In the present embodiment, the ticket information database 31 may provide the data about user's gender and age, a baggage information database 32 may provide user baggage number and baggage status; the face recognition system 33 may recognize a face and corresponding facial features of a user who is watching the mobile service terminal screen. Specifically, the face recognition system 33 may use, for example, a product provided by Beijing Megvii Technology Co., Ltd. or other suitable commercially available product. In the present embodiment, the communication device is used to establish a network communication connection between the mobile service terminal 10, the backend server 20 and the third-party server 30. In the present embodiment, the communication device may include a router. The mobile service terminal may be connected to a backend server via, for example, a wired internet, a wireless WiFi network and a mobile communication network and the like.

In the present embodiment, the backend server 20 may be a single server or a server farm. Each of the units in the backend server 20 may be a separate server. The number, type, and interface of the servers or units may be increased or decreased depending on the actual needs.

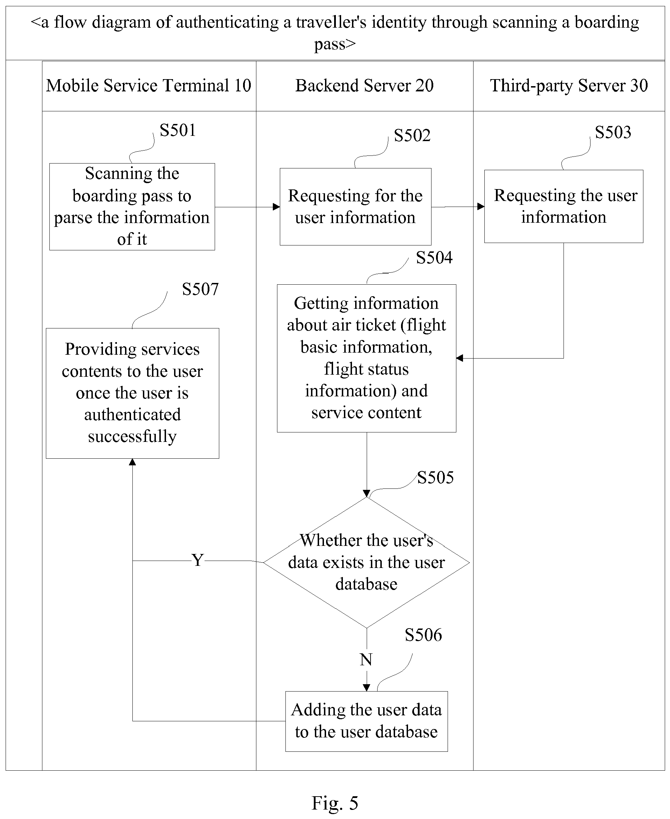

Fig. 5 is a flow diagram showing a process of authenticating a user and providing corresponding service content according to an embodiment of the present invention. The authentication module is used to authenticate the identity of a user based on the user information collected by the information collecting unit. Specifically, the characteristic information of the user can be collected through scanning a boarding pass, an ID card and a passport, etc. or through logging in via phone number, or through a face and a voiceprint, etc to authenticate the identity of a user. Its implementation will be illustrated below by the example of logging in via boarding pass. As shown in Fig. 5, the method may comprise the following steps:
S501: scanning the boarding pass by the mobile service terminal to parse the information of the boarding pass.

A user may place the boarding pass face up on the portable baggage tray on the frame of a trolley. The main camera or the scanning device on the mobile service terminal 10 scans two-dimensional code information on the boarding pass or the specific information area on the boarding pass to parse the boarding pass information of the user, for example, the flight number, the seat number and the departure time and other information.

S502: requesting for the user information to the backend server 20.

The mobile service terminal 10 transmits the parsed boarding pass information of the user to the backend server 20 via an interface module for requesting the user information.

S503: requesting the user information to the third-party server 30.

The backend server 20 transmits the parsed boarding pass information of the user to the third-party server 30 for r requesting the user information.

S504: getting information about air ticket (flight basic information, flight status information) and service content.

The backend server 20 receives the user information returned by the third-party server 30 and forwards it to the mobile service terminal. The user information may include the collected identity information of the user, such as the user's ID, gender, age, etc., and may include collected flight basic information and flight status information, such as flight number, airline, departure date, departure, destination, planned departure time, planned arrival time, flight status, boarding gate, transit or stop.

The following is an example of how to realize the acquisition of the flight basic information and the flight status information through the backend server.

First, the mobile service terminal 10 is deployed to the airport, connecting with the IT system of the airport.

Second, the airport ITC (IT Center) sends the flight basic data synchronization information to the IBM MQ server at regular intervals (for example, 0:00 and 12:00), and the IBM MQ server pushes the information to the backend server 20 in a message-passing manner. MQ is an application-to-application communication method. This example uses the IBM MQ server for the delivery of flight information. When the flight data is dynamically updated, the airport ITC updates the flight information and sends it to the IBM MQ server. The IBM MQ server pushes the information to the backend server 20 in a message-passing manner.

The backend server 20 then receives and stores the flight information data pushed by the ITC data center. At the same time, when the ITC data center receives the push of the flight information change, the stored flight information data is updated.

S505: querying the user database for the user ID by the backend server 20 to determine whether the user's data exists in the user database.

S506: adding the user data to the user database.

If the user's ID exists, the user is judged as an existing user; else if the user's ID does not exist, the user is judged as a new user. Then user's ID, gender, age and behavior information of the user may be stored in user database. The behavior information added to the user database may be, for example, when the user is using mobile service terminal 10, every opened page, every operation and the duration of every operation may be recorded and transmitted to the backend server. The backend server may perform statistics, analysis and calculation based on the behavioral information to obtain user's behavior interests and the like. For example, a data analysis unit 22 of the backend server may carry out statistics, analysis and calculation on type of each page and duration of each page browsed by the user so as to obtain an average dwell time and a total dwell time on each page. If the user's average dwell time or total dwell time on the IT digital page is significantly larger than the other pages, it can be considered that IT digital is one of the user's Behavioral interests.

S507: providing services contents to the user once the user is authenticated.

After a user is authenticated successfully by the mobile service terminal 10 through a boarding pass, the flight dynamic information is displayed on the mobile service terminal 10. The mobile service terminal displays or pushes a personalized user interface, service content and the like directed to the user on its interface.

In the present embodiment, the user identity may be authenticated through logging in the mobile service terminal 10 via a mobile number. The process may include:
S501': A user inputs her / his mobile number and/or a SMS verification code. Then the terminal service terminal 10 authenticates the inputted information through the user database in the backend server. For example, a user inputs a mobile number on the operation interface of authentication of the mobile service terminal 10 to request authentication for the backend server. Then the backend server sends a 4-digit SMS verification code to the user's mobile phone. The user enters the 4-digit SMS verification code on the authentication interface of the mobile service terminal 10, and the backend server verifies whether the content entered by the user coincides with the 4-digit SMS verification code sent to the user's mobile phone, if yes, the authentication is successful.
S502': After the above verification is successful, the backend server 20 may obtain information such as the user's mobile number, current time and the airport, etc.
S503': The backend server sends above received information to a third-party server (such as a server dedicated to the flight and passenger management).The third-party sever may obtain the corresponding user identity information and the flight basic information and the flight status information associated with the user according to the mobile number reserved by the user.
S504': The backend server receives feedback information from the third party server, such as the user identity information, the flight basic information and flight status information, etc.
S505': The backend server compares above obtained information with the information in the user database. More specifically, the backend server searches the user ID through the user database to determine whether the user's data exists in the user database. If the user's ID exists, the user is an existing user; else if the user's ID does not exist, the user is a new user, then the user's ID, gender, age and behavior information may be added to the user database.

In addition, In the present embodiment, the mobile service terminal 10 may be logged in by the ID card or the passport to authenticate the user identity, and the user's characteristic information may be collected by means of face and voiceprint, etc.

Authenticating of user identity through a unique identification, such as above-mentioned boarding pass, passport, ID card, face and voiceprint or the like, has the advantage of high reliability and simple operation.

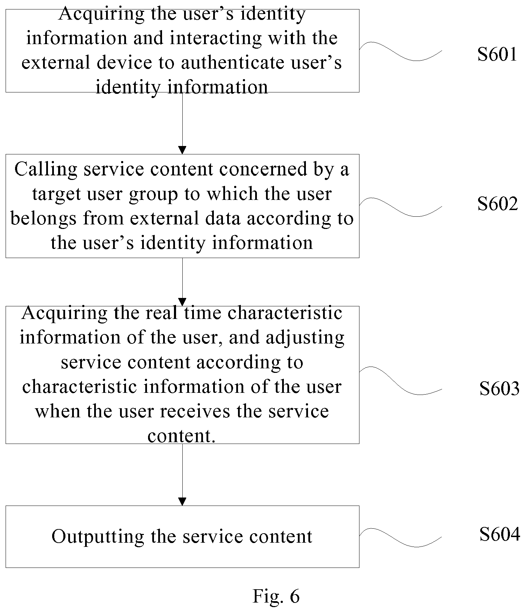

Fig. 6 is a flow diagram showing a process of pushing personalized services to a user according to an embodiment of the present invention. As shown in Fig. 6, it may include the steps of:
S601: acquiring the user's identity information and interacting with the external device to authenticate user's identity information.

In the present embodiment, the authentication may be realized through scanning boarding pass, ID card and passport and so on by the main camera when the user logs in the mobile service terminal, or through logging in with a phone number, or through face and voiceprint and so on so as to acquire characteristic information of the user to determine the user's basic identity information, such as user's ID, flight number, gender, age and other identity information, and authenticate the user's identity (Specific authentication process may be conducted with reference to two embodiments as shown in Fig. 5).

S602: calling service content concerned by a target user group to which the user belongs from external data according to the user's identity information;
This step may be carried out as follows:
Firstly, a user database is created.

After the authentication is completed, the mobile service terminal assigns an independent user ID number to each user and creates a registered user database. Among them, it is not necessary for the old users to repeat registration, but simply add their behavior information to the database. The information about these users is collated and analyzed according to the identity information and historical behavior information of different users to obtain a subdivided multiple dimensional user database.

For example, the database may include the contents of the user's following attributes:
1) age: people under 60 are divided into a age group by every 10 years old; people over 60 is divided into one age group.
2) gender: male, female.
3) departure: a province and city where the departure airport is located.
4) destination: a district (such as eight districts consisting of North China, Central China, East China, South China, Northwest, Northeast, Southwest and Hong Kong, Macao and Taiwan), province and city where destination airport is located.
5) takeoff period: the departure time of the flight. For example: 6:00 a.m ∼ 12:00 a.m, 12:00 p.m ∼ 18:00 p.m, 18:00 p.m ∼ 24:00 p.m;
6) seating: first class; economy class.
7) flight frequency: the number of flights of the user in the last year.
8) Behavioral interests: finance and investment, real estate and home furnishings, travel, IT digital products, automobile, fashion, educational training, childrearing, recruitment and employment, physical fitness, music and movies and other categories (the data can be determined by contents what the user browse on the mobile service terminal).

Secondly, the users may be divided into various target user groups with different attributes through storage, analysis of massive different user data to provide personalized service for different target user groups.

Typical target user groups in the user database may consist of, for example:
1) a high-end business group: the users concerning about finance and investment, real estate and home furnishings, automotive and other high-end service products, with more than 50 of flight frequency per year, most of first class, flight time occurred in the daytime and;
2) a public group: the users concerning about educational training, music and movies and other public service products, with under 50 of flight frequency per year, most of economy class, flight time occurred in the night.

It should be noted that, above-mentioned database may be adjusted as needed, such as to facilitate business expansion and service needs. The present embodiment supports custom new user group (for example, between 20 and 30 years of age, the flight destination is Hong Kong, Macao and Taiwan, and young men and women who love to travel), and the Hong Kong, Macao and Taiwan travel information can be pushed to the group.

In the present embodiment, the analysis module of the mobile service terminal may provide personalized service content matching a target user group to which the user of the different attribute belongs through analyzing attribute (such as identity information, behavior interests, usage records, flight records (for example departure, destination, takeoff period, seating, flight frequency and so on)) of registered user in database.

The present embodiment may analyze manually the attributes of a specific user, and then classify the users of the same attribute through a configuration file.

To provide an illustrative example, a user group who meet the following group attributes is defined as a high-end business group: more than 50 of flight frequency per year, most of first class, flight time occurred in the daytime, concerning about finance and investment, real estate and home furnishings, automotive and other high-end service products. Then the following configuration is created in the management background.
1) Group ID: user_group001;
2) Group Name: High-end Business Group;
3) Group attributes:
   Attribute 1: age (30-50);
   Attribute 2: gender (unlimited);
   Attribute 3: departure (unlimited);
   Attribute 4: destination (unlimited);
   Attribute 5: takeoff period (more than 70% of takeoff period is between 6:00-18:00);
   Attribute 6: seating (More than 70% of the seats are first class);
   Attribute 7: flight frequency (more than 50 of flight frequency per year);
   Attribute 8: behavior interests (finance and investment, real estate and home furnishings and automotive).

The user's attributes are matched with above group attributes after the user logs in the mobile service terminal. When the user's attributes match the attributes of the high-end business group, the mobile service terminal searches for and calls the resource information matching the user group, and push the information to the user.

In the present embodiment, the above-mentioned matching of the user with the preset target user group may be performed in an exact match. For example, an exact match may be used to classify the user to the high-end business group when the user's above attributes meet requirements, and a fuzzy match may be used when only some of the attributes of the user do not meet the requirements. Fuzzy matching rules can be pre-set. In the present embodiment, the preset rule may be: when the ratio of the attributes conforming to the target user group is greater than the first preset value (e.g., 70%), or each user's attributes may be preset a weight value, when the total weight value of the attributes conforming to the target user group is greater than the second preset value (e.g., 60%), the user is categorized into the target user group. Alternatively or additionally, various settings can also be made as needed to meet the personalized service needs.

S603: collecting the real time characteristic information of the user, and adjusting service content according to characteristic information of the user when the user receives the service content.

In the present embodiment, the sub camera of the mobile service terminal acquires the characteristic information (such as number, gender, age and expression, etc.) of the user in real time, and transmits the characteristic information to a personalized service unit of the backend server. The service contents may be adjusted in real time by analyzing the characteristic information of users.

In the present embodiment, the steps of face recognition by the sub camera may comprise: the sub camera acquires the information of face to generate an image file with the format of JPEG, PDF, etc; a face recognition SDK (Software Development Kit) of a face recognition system (for example, Face ++ provided by Beijing Megvii Technology Co., Ltd.) in a third party server is called to recognize all the faces and corresponding face attributes in given pictures. The face recognition SDK may also be integrated into the software system of the mobile service terminal. When the image file is acquired, it is recognized by the face recognition system in the third party server connected remotely through the API (Application Programming Interface) in the SDK.

In the present embodiment, above sub camera acquires picture of the user in two ways, the one is passive acquisition, that is, user's face is acquired when a specified user interface is entered or a relevant instruction is received from the backend server; the other is active acquisition, that is, the user's face is acquired at a predetermined time period (for example, 1 minute) in the normal power-on state. It should be noted that above acquisition way of face information may also achieved by main camera or other device with camera function and the time interval for image acquisition can also be prolonged or shortened as needed.

In the present embodiment, the number, position and corresponding facial attributes of faces in the given pictures may be recognized through above-mentioned recognition system built in the mobile service terminal. The facial attributes data may include:
Gender (male, female and confidence levels of result);
Age (estimated age and the margin of plus and minus);
Race (yellow race or white race or black race, and confidence levels of result);
Smile Degree (which is a preset smile value in the range of 0-100);
   In the present embodiment, the preset smile value is 0-100, bigger the value is, the higher the smile degree is. The smile degree may be divided into multiple levels of satisfaction (such as very satisfied, satisfied and dissatisfied). And then the multiple levels of satisfaction are associated with the multiple corresponding smile values. For example:
   "Very satisfied" is associated with the smile value 80-100, it shows that the current content of the display is obviously very attractive to the user, i.e., the user is very satisfied with the contents of the push.
   "Satisfied" is associated with the smile value 60-79, it shows that the current content of the display is obviously attractive to the user, i.e., the user is satisfied with the contents of the push.
   "Dissatisfied" is associated with the smile value 0-59, it shows that the current content of the display is not attractive to the user, i.e., the user is not satisfied with the contents of the push.

In the present embodiment, an existing face recognition system with a function of determining a specific smile value according to the facial attribute of the face picture on the screen is used. The details of them are not described herein.

Next, a 30 years old female user with a child using a mobile service terminal is taken as an example to illustrate how the mobile service terminal provides personalized services by using a face recognition system.

The lady scans her boarding pass for authentication. She logs in the user interface of the mobile service terminal after the authentication is successful. At first, the mobile service terminal provides cosmetic makeup and other services to her based on the identity information of the female user. When the sub camera recognizes the information of accompanying child through the face recognition system, the mobile service terminal connects to the content database correlated to children to adjust service content so as to provide such as parent-child services, education consulting and other content services. In addition, the push content for the child in the backend server can be called based on the recognized child characteristics.

More specifically, for example, when the face recognition system recognized the following information, that is, the number of faces is 2, one being a woman of about 30 years old, and the other being a boy of about 5 years old, the smile degree of the woman is 0-59, and the smile degree of the boy is also 0-59, the contents aiming at the woman may be switched to cartoons aiming at children. If the simile value of the boy at this time is 90, which indicates that the cartoon is much attractive to the child, the child is satisfied with the cartoon. If the simile value of the child at this time is between 0 and 40, it indicates that the current cartoon is less attractive to the child. The current cartoon may be switched to song and dance programs.

In the present embodiment, before pushing the plurality of resource information to the user, the home page of the content to be pushed may be displayed in combination in the user interface of the mobile service terminal to the user for selection. For example, the content to be pushed may be displayed in the user interface with multiple thumbnails at the same time, or the home page of each push contents may be cyclically displayed on the user interface of the mobile service terminal to the user for selection. When the user does not make a selection, it can be kept in a circular display mode, or jump to the service content page with the highest matching with the identified identity and behavior information after a preset time (for example, 6 seconds).

S604: outputting the service content.

The contents which the user is interested in are displayed in the user interface and/or played by a playback unit to provide personalized information service for the user.

The mobile service terminal can recognize the characteristics information of the user, and the recognized results can be used to provide decision basis for personalized service, adjust the contents of the push in real time and judge degree of attraction that target user are attracted to the commercial advertising and then determine the value of the commercial advertising according to the degree of attraction.

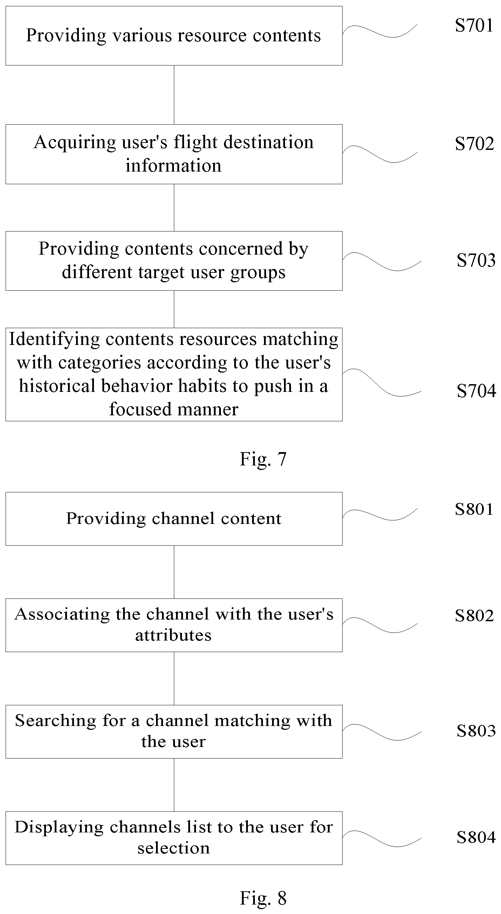

Figs. 7 to 10 illustrate several embodiments to describe in detail the implementation of a personalized service. Specifically, personalized information services provided to the user may include: destination service push, channel entertainment content push; commercial advertising precision push; airport service information push and other services.

It should be noted that the four personalized services illustrated below are of single service provided to the user. It is certainly also possible to adjust the service contents according to the characteristic information when the user receives the service contents. For example, when a user is not satisfied with the content of a commercial advertisement push, another commercial advertisement may be provided to the user, or a commercial advertisement may not be provided to the user, and the destination service, channel entertainment content may be provided to the user for selection. Specifically, it is possible to acquire the user's characteristic information in real time by the sub camera of the mobile service terminal described above, which will not be described again.

Fig.7 is a flow diagram of providing personalized services according to the first embodiment of the present invention. As shown in Fig.7, this embodiment describes a specific implementation of the destination service pushing, which may include the following steps:
S701: providing various resource contents;
   Various resource contents (such as travel, food, home, finance, real estate, news and so on) may be uploaded to the personalized service unit of the backend server (or may be directly uploaded to a storage unit of the mobile service terminal, the specific way may be selected as needed ). Then a destination, category (such as travel, food, home, finance, real estate, news and so on) and other marks are added to these resource contents.
S702: acquiring user's flight destination information;
   After the user logs in the mobile service terminal, system may acquire user's flight destination information according to the flight number of the user.
S703: providing contents concerned by different target user groups;
   The mobile service terminal may search for the contents resource matching with the user's destination from the personalized service unit in the backend server and push them to the user. The contents resource may be network resource obtained from a third party server.
S704: identifying contents resources matching with categories according to the user's historical behavior habits to push in a focused manner.

Identifying the matched contents in information push may be achieved as follows:
The contents of information push may include frontend applications part and backend configuration management part. The frontend applications part may acquire user's identity information (such as user's ID, destination or the like) and user's browsing behaviors, search for relevant contents from content repository in backend and display them in the application interface. The backend configuration management part mainly implements the upload, management, storage and configuration settings of the destination contents resource. The usage of destination contents may be mainly determined by various parameters in a configuration file. The parameters in the configuration file may be content ID, content name, path to content, content destination and content category. And the content category may include: finance and investment, real estate and home furnishings, travel, IT digital products, automobile, fashion, educational training, childrearing, recruitment and employment, physical fitness, music and movies and other categories.

As described above, after the user logs in the mobile service terminal through scanning a boarding pass or other means, the mobile service terminal may obtain the information such as user's ID, destination, behavior interests and the like, and search for the corresponding destination contents based on the parameters set in the configuration file to display on the mobile service terminal to the user. In the meantime, the destination content matching with above category is preferentially displayed to the user based on the user's behavior interests.

Fig. 8 is a flow diagram of providing personalized services according to the second embodiment of the present invention. As shown in Fig. 8, this embodiment describes an implementation method of channel entertainment content push, which pushes and displays different channel ordering to satisfy the user's different levels of entertainment needs in accordance with different target user groups. The method may comprise:
S801: providing channel content;
   The channel content may be stored in a personalized service unit of a backend server. The backend server is in the same local area network with the mobile service terminal. For example, cosmetics, fashion and other channels are arranged at the top of the list for female users; financial, commercial and other channels are at the top of the list for the financial profession jobholders. The channel content can be considered as a content resource package, which can be stored in the personal service unit of the backend server, or be obtained by linking to other servers.
S802: associating the channel with the user's attributes (characteristic);
   A channel may be associated with a user's characteristic through a backend server. The association field may include: user's gender, user's age and channel ordering.
S803: searching for a channel matching with the user;
   A channel matching with the user may be identified from the personalized service unit according to the collected user gender, user age and other information, when the user logins in the mobile service terminal.
S804: displaying channels list to the user for selection.

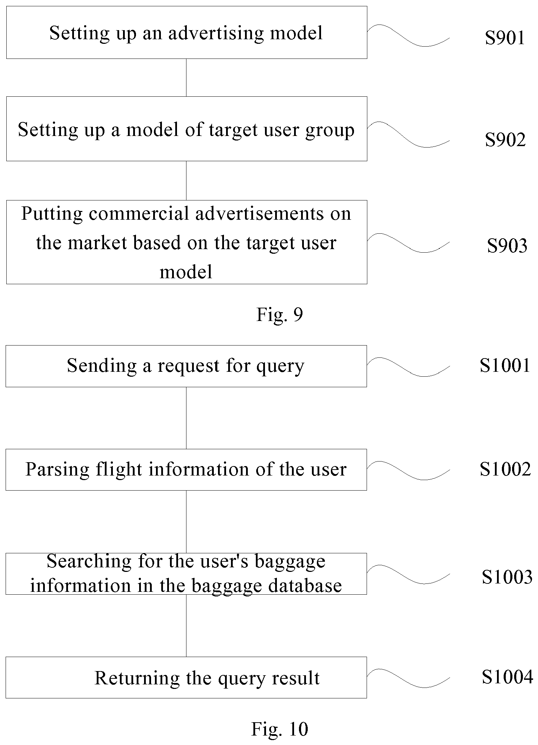

   Fig. 9 is a flow diagram of providing personalized services according to the third embodiment of the present invention. As shown in Fig. 9, this embodiment describes an implementation of the precise push of commercial advertising.
S901: setting up an advertising model;
   For example, the contents of an advertising model may be as follows:
   Advertising ID: ad_001;
   Advertising Name: so-and-so mobile phone;
   Advertising Resources Path: advertising repository/ad_001.apk;
   Advertising Time: from April 1,2015 to June 30,2015;
   Advertising Location: the recommended position on homepage;
   Advertising Category: IT digital products.
S902: setting up a model of target user group;
   For example, to customize a young fashion user group model. The target user model may be set by selecting one or more of the following: user dimensions, gender, age, destination, airline, takeoff period, seat, etc.

The contents of the young fashion user group model may be as follows:
Age: 18-35;
Gender: male or female;
Departure: unlimited;
Destination: unlimited;
Takeoff period: unlimited;
Seating: unlimited;
Flight frequency: unlimited;
Behavioral interests: IT digital products, automobile, fashion, music and movies.

S903: Putting commercial advertisements on the market based on the target user model.

When an eligible target user logs in to the mobile service terminal, the mobile service terminal may push the commercial advertisements accurately according to the information set in the configuration file, such as the advertisement time, contents and location, etc.

Taking advertising for a fashion mobile phone as an example, advertising time, location and target user may be set through a configuration file in the background management system. When an eligible target user logs in to the mobile service terminal, the specified advertisement can be displayed at the specified advertising time and location. The configuration file of the fashion phone may be set as follows:
Advertising ID: ad_001;
Advertising Name: so-and-so mobile phone;
Advertising Resources Path: advertising repository
Advertising Time: from April 1,2015 to June 30,2015;
Advertising Location: the recommended position on homepage;
Advertising Category: IT digital products;
Target user model: young fashion user group.

According to above configuration file, when an eligible target user logs in the system and enters the home page, a mobile advertisement with an Advertising ID being ad_001, may be displayed at the recommended position of the homepage. Otherwise, the advertisement is not shown.

In addition, as to commercial advertisements, in order to optimize the push of advertising content, frequency and time of the push can be dynamically adjusted as follows.

Two fields, times of playback per unit time and type of unit time (such as natural day, natural week, natural month), may be added to the configure file of advertising. The number of times of playback per unit time is set as the first preset value (for example, 10 times) and the type of unit time is set as the second preset value (for example, 1 week). When the advertisement content is played, the mobile service terminal records the playback start time and the playback end time, and periodically transmits above data to the backend server. And the total number of times of the playback in all mobile service terminals in the specified unit time may be calculated by the backend server. When the total number of times of playback reaches the first preset value (e.g.,10 times), an instruction to stop playing the advertisement is sent to the mobile service terminal, and the access flag of the advertisement content data is set to "Access denied" to prohibit the continuation call and playback of the advertisement content. Beginning to count the time of setting access flag to "Access denied" while the access flag of the content data is set to "Access denied". When the stop playback time exceeds the second preset value (e.g., one week), the backend server sends an instruction to the mobile service terminal to start to play the advertisement. After the mobile service terminal receives the instruction, it restarts playing the advertisement, and records the start time and the end time of each playback and gathers them regularly to the backend server.

In the present embodiment, various changes can be made to the advertisement push manner for various requirements by different settings of the fields in the configuration file so as to achieve the purpose of pushing the commercial advertisements accurately.

Fig. 10 is a flow diagram of providing personalized services according to the fourth embodiment of the present invention. As shown in Fig. 10, this embodiment describes an implementation of a method of service information push (e.g., baggage self-query) in the airport, it may include the following steps:
S1001: sending a request for query;
   A request for query may be sent by entering a baggage number or scanning boarding pass / ID card / passport, etc.
S1002: parsing flight information of the user;
   The mobile service terminal parses the flight information of the user and sends the flight information to the backend server.
S1003: searching for the user's baggage information in the baggage database;
   The backend server transmits the flight number to a third-party server (baggage information database), the third-party server searches for the baggage number or baggage status from its baggage information database and returns the information to the backend server.
S1004: returning the query result.

The backend server feeds back the user's baggage number and baggage status to the mobile service terminal. Then the mobile service terminal displays the baggage number and the baggage status for the user inquiry.

The above are only some embodiments of the present invention. Those of ordinary skilled in the art will appreciate that a number of modifications and improvements to the present invention can also be made without departing from the idea of the invention, all of which are contained within the protection scope of the present invention.

## Claims

1. A mobile service terminal comprises:
an information collecting unit (11) configured to acquire user information, wherein the user information comprises identity information/characteristic information of the user and operation information entered on an user interface of the mobile service terminal;
an interface unit (12) configured to interact with an external device;
a processing unit (13) connected with the information collecting unit and the interface unit and configured to authenticate the identity of a user according to the collected user information, call service content matching a target user group to which the user belongs from the data of the external device according to the identity information of the user, and adjust the service content according to characteristic information of the user when the user receives the service content, and
an output unit (14) connected with the processing unit and configured to output the service content.

2. The mobile service terminal of claim 1 further comprises: a storage unit (15) connected to the information collecting unit and the processing unit and configured to store a database, wherein the database at least comprises historical behavior information of the user and/or the collected user information.

3. The mobile service terminal of claim 1 or 2, wherein the processing unit comprises:
an authentication module (131) configured to authenticate the identity of a user through interacting with the external device based on the user information collected by the information collecting unit;
an analysis module (132) configured to analyze the historical behavior information and/or the collected user information and match the attributes of the user with the attributes of a preset target user group to categorize the user into the preset target user group;
an search module (133) configured to search and obtain an information portal associated with the target user group by the interface unit; and
a call module (134) configured to call the associated information by the information portal to display and/or play on the user interface of the mobile service terminal.

4. The mobile service terminal of claim 1, wherein the information collecting unit comprises a scanning device or a first camera used to obtain the identity information of the user, and/or a second camera used to obtain the characteristic information of the user.

5. The mobile service terminal of claim 4, wherein the mobile service terminal is mounted on a trolley, the scanning device or the first camera is provided at the bottom of the mobile service terminal for scanning the user's ID card, the second camera is located above the front screen of the mobile service terminal for face recognition.

6. A mobile service system for airport services comprises:
a mobile service terminal (10) according to any one of claims 1 to 5;
a backend server (20) configured to provide external data support for the mobile service terminal; and/or
an interface connected with a third-party server (30); and
a communication device (40) configured to establish a network communication connection between the mobile service terminal, the backend server, and/or the third-party server.

7. The mobile service system of claim 6, wherein the backend server comprises:
an identity authentication unit (21) configured to authenticate the user identity of the mobile service terminal and communicate with the third-party server to obtain current journey data of the user from the third-party server;
a data analysis unit (22) configured to carry out statistics, analysis and calculation on types and access duration of pages accessed by the user to determine the user's preference;
an personalized service unit (23) configured to provide personalized service interface and personalized service information by the means of the mobile service terminal.

8. The mobile service system of claim 6, wherein the third-party server comprises:
a ticket information database (31) to provide the user's gender, age and journey data;
a baggage information database (32) to provide user baggage number and baggage status; and
a face recognition system (33) to recognize a face and corresponding facial features of a user who is watching a screen of the mobile service terminal.

9. A data processing method for airport services, wherein the airport is provided with a mobile service system according to any one of claims 6-8, the method comprises:
collecting (S601) user information, by a mobile service terminal, wherein the user information comprises identity information/characteristic information of the user and operation information entered on a user interface of the mobile service terminal;
authenticating (S601) the identity of a user, by the mobile service terminal, through interacting with an external device based on the collected user information;
calling (S602) service content matching a target user group to which the user belongs from the data of the external device according to the identity information; and
adjusting (S603) service content of push according to characteristic information of the user when the user receives the service content.

10. The method of claim 9, wherein the act of adjusting service content of push comprises:
pushing service content by the mobile service terminal according to the identity information and behavior information of the user;
collecting the characteristic information of the user in real time during the process of the user receiving the service content of push;
recognizing a degree of satisfaction of the user with respect to the pushed service content based on the characteristic information, and adjusting the service content of push.

11. The method of claim 10, wherein the characteristic information comprises a number, gender, age and expression of users, and the expression comprises a smile degree which is preset to a plurality of smile values.

12. The method of claim 11, wherein the degree of satisfaction comprises a plurality of satisfaction levels, the plurality of satisfaction levels being associated with the corresponding plurality of smile values.

13. The method of any one of claims 9-12, wherein the service content comprises one of the following: destination service push, channel entertainment content push, business information push and airport service information push.

14. The method of claim 9, further comprising:
creating a user database of a plurality of target user groups based on identity information and historical behavior information of users, the plurality of target user groups having multiple dimensions, respectively

15. The method of claim 14, further comprising:
matching the user with the user group using fuzzy matching rule while identifying user identification, and pushing service content associated with the matched target user group to the user.
